# EUROPEAN PATENT APPLICATION

(11) **EP 3 525 126 A1**
(43) Date of publication of application: **14.08.2019**
(21) Application number: 18156084.8
(22) Date of filing: 09.02.2018
(51) Int. Cl.: G06F 21/52, G06F 21/57

(54) **FIRMWARE INTEGRITY TEST**

(71) Applicant: Siemens Aktiengesellschaft, 80333 München (DE)
(72) Inventor: Sel, Tolga, 80809 München (DE)

(57) **Abstract**

A first device (101, 105, 106, 107) includes processor circuitry configured to perform: obtaining a first fingerprint value (135) of a functionality provided by a first firmware (131); receiving, from a second device (111, 115, 116, 117), a second fingerprint value (136) of the functionality provided by a second firmware (132) as executed by the second device (111, 115, 116, 117); comparing the first fingerprint value (135) and the second fingerprint value (136); and based on said comparing: selectively detecting a modification of the second firmware (132) if compared to the first firmware (131) .

## Description

### TECHNICAL FIELD

Various embodiments of the invention generally relate to detecting modification of a firmware. Various examples of the invention specifically relate to detecting modification of a firmware by comparing a fingerprint value indicative of a functionality provided by the firmware with a reference fingerprint value. Thereby, the integrity of the firmware can be tested.

### BACKGROUND

A Field Programmable Array (FPGA) operating using Static Random-Access Memory (SRAM) typically is required to be programmed using configuration data at each startup. This configuration data is sometimes referred to as bitstream. To mitigate an attack vector employing a modified bitstream, an additional integrity test can be performed. The integrity test helps to verify authenticity of the bitstream or at least of a part of the bitstream. The integrity test, according to reference implementation, is based on a cryptographic key stored at the FPGA.

One attack vector includes readout of the cryptographic key, e.g., using a side-channel attack. Then, modified bitstreams can be loaded into the FPGA.

Hence, according to certain attack vectors, a firmware defined by the bitstream may be modified as explained above. Then, a processor circuitry implemented by the FPGA using the firmware could yield manipulated results.

Using conventional integrity tests, it is not possible or only possible to a limited degree to test whether the firmware defined by the bitstream has been modified. There are only limited options available for such a firmware integrity test.

### SUMMARY

Therefore, a need exists for advanced techniques of detecting modification of a firmware. Specifically, a need exists for advanced techniques for firmware integrity tests that overcome or mitigate the above-identified restrictions and drawbacks.

This need is met by the features of the independent claims. The features of the dependent claims define embodiments.

According to an example, a method of operating a first device includes obtaining a first fingerprint value. The fingerprint value is indicative of a functionality provided by a first firmware. The method also includes receiving a second fingerprint value from a second device. The second fingerprint value is indicative of the functionality provided by a second firmware is executed by the second device. The method also includes comparing the first fingerprint value and the second fingerprint value. The method further includes selectively detecting a modification of the second firmware if compared to the first firmware, based on said comparing.

The method may further include: executing the second firmware at the second device.

For example, the first device may be a different device than the second device. For example, it would be possible that the first device and the second device are different instances of the same control circuitry, i.e., implement the same processing architecture.

For example, at least one of the first device and the second device may be a FPGA. Here, a bitstream used as configuration data for the FPGA may define the firmware, e.g., including a soft CPU and corresponding firmware. According to examples, the second device is implemented by the FPGA.

For example, at least one of the first device and the second device may be an application-specific integrated circuit (ASIC). For example, at least one of the first device and the second device may be a microprocessor.

According to examples, the first device is implemented by a processor of a server. For example, the server may be connected to the Internet.

Generally, the first device and the second device may be located remotely from each other. Thereby, an attack vector employing modification of, both, the first firmware and the second firmware is prevented.

The first fingerprint value may be uniquely associated with the functionality provided by the first firmware. Likewise, the second fingerprint value may be uniquely associated with the functionality provided by the second firmware, as executed by the second device. For example, the fingerprint values may be indicative of a calculation result of the functionality. For example, the fingerprint values may be indicative of a calculation result of one or more function calls of a function associated with the functionality. For example, the fingerprint values may be indicative of values of runtime parameters provided by the functionality, e.g., memory read-/write-addresses, etc..

By said comparing of the first fingerprint value and the second fingerprint value with each other, changes in the behavior of the functionality as provided by the first and second firmware can be identified. Thereby, the modification of the second firmware can be reliably detected. Thereby, a reliably integrity test of the second firmware is implemented.

The first fingerprint value could also be referred to as reference fingerprint value, because a trust level associated with the first firmware may be higher than a trust level associated with the second firmware. For example, it would be possible that the first device is deployed in a trusted environment, such as a protected server room, etc. Here, many attack vectors that exist for devices not arranged in a trusted environment can be mitigated, such that the first device has a higher trust level than the second device. Thus, simultaneous modification of the first firmware and the second firmware may be difficult; hence, the modification of the second firmware can be reliably detected based on the first fingerprint value providing a trusted reference.

As a general rule, different kinds and types of fingerprint values may be used. For example, hash values could be used to map a characteristic of the functionality onto a compressed data structure. By using the fingerprint values, a content of the functionality is not compromised, thereby fulfilling privacy restrictions. Also, control signaling overhead is reduced, if a compressed data structure is used for the fingerprint values.

As a general rule, fingerprint values described herein may be generated using hardware circuitry. The hardware circuitry for generating the fingerprint value may be connected with the respective processor. Thereby, the processing power imposed on the processor to calculate the fingerprint value may be limited. The hardware circuitry may be an ASIC for the purpose of providing has values.

Various options are available for obtaining the first fingerprint value. In one option, obtaining the first fingerprint value includes executing the first firmware and generating the first fingerprint value based on said executing of the first firmware.

Hence, it would be possible that the first device is configured to execute the first firmware; while the second device is configured to execute the second firmware. Thereby, the execution of the first firmware at the first device may implement a reference for the execution of the second firmware at the second device. Executing the firmware when generating the first fingerprint value allows to take into consideration varying runtime parameters when generating the first fingerprint value. For example, time-dependent runtime parameters can be used as an input to the respective mapping function used for generating the first fingerprint value. This, generally, helps to increase security against attacks.

In another option, obtaining of the first fingerprint value includes retrieving the first fingerprint value from a database. In other words, it would be possible that the first fingerprint value is pre-generated. This may help to reduce a computational load imposed on the first device, because it may not be required to execute the first firmware at the first device. For example, this may facilitate testing integrity of multiple firmwares deployed at multiple devices by the first device.

When executing the first firmware to generate the first fingerprint value, it would be generally possible to synchronize execution of the first firmware with execution of the second firmware, using control signaling between the first device and the second device. Thereby, any variable influences affecting generation of the fingerprint values may be synchronized between the first device and the second device; this allows for reliable comparison of the first fingerprint value and the second fingerprint value.

Some examples of such control signaling for synchronization between the first device and the second device are provided below.

In one example, the method may further include transmitting and/or receiving (communicating) a seed value between the first device and the second device. For example, the seed value may be communicated from the first device to the second device; and, hence, transmitted by the first device. Alternatively, it would also be possible to communicate the seed value from the second device to the first device, and hence the seed value can be received by the first device. The seed value may form an input to the execution of the first firmware. Generally, a result of the functionality can differ for different seed values. By synchronizing the seed value between the first device and the second device, it becomes possible to also take into account this seed value-dependent behavior of the execution of the first firmware and the second firmware when detecting the modification of the second firmware. This, generally, raises an accuracy with which the modification of the second firmware can be detected. The integrity test of the second firmware becomes more reliable, based on freshness of the integrity test.

For example, the seed value may be time-dependent, position dependent, etc. For example, it would be possible that at least a part of the seed value is randomized. For example, a Nonce can be used as seed value.

As a general rule, it would be possible that the first firmware provides multiple functionalities including the functionality based on which the integrity test is implemented. Likewise, it would be possible that the second firmware provides multiple functionalities, including the functionality based on which the comparison is implemented. Then, a synchronization between the execution of the first firmware and the second firmware may be achieved by specifying the particular functionality on which the comparison is to be based. In this regard, the method may include communicating a control value between the first device and the second device. The control value can be indicative of the functionality. The first firmware can be executed based on the control value. The control value may be implemented by a service identity of the functionality.

For example, the control value may be indicative of the particular function executed by the respective firmware. Each function may include one or more function calls, as sub-functions.

This facilitates a selection of the functionality from multiple functionalities that can be provided by the first firmware and the second firmware. For example, thereby, it would be possible to change the particular functionality each time integrity of the second firmware is to be test. Further, it may be possible to restrict the integrity test to certain safety-relevant or critical functionalities. This helps to further increase a security level associated with the integrity test.

The control value could be communicated from the first device to the second device; and/or from the second device to the first device.

In various examples, it may be desirable to mitigate an attack vector that relies on compromising the control signaling between the first device and the second device. In this regard, a cryptographic value - e.g., a cryptographic key or other cryptographic material - can be used to encrypt the control signaling between the first device and the second device. For example, such a cryptographic value can be used to derive control signaling encryption keys or can be used to encrypt the control signaling directly. For example, a cryptographic value may be communicated between the first device and the second device; then, that cryptographic value may be used to encrypt the second fingerprint value. The second fingerprint value can then be received encrypted in accordance with the cryptographic value.

As a general rule, such encryption of fingerprint values is optional. There may be other options available for protecting the integrity of fingerprint values used throughout the exmaples described herein.

For example, the cryptographic value may be at least once of a Nonce and an indicator indicative of a key used for generating the first fingerprint value and/or the second fingerprint value. For example, a mapping algorithm used to generate the first fingerprint value and/or the second fingerprint value may be parameterized based on the key. The Nonce can be a random or pseudo-random number issued for the encryption. For example, it would be possible to modify a fingerprint as discussed herein using a nonce. Then, the modified fingerprint may be further encrypted using the cryptographic key. Replay attack vectors may therefore be mitigated.
As a general rule, various options are available for encryption in connection with the control signaling between the first device and the second device. For example, a symmetric or asymmetric encryption could be implemented. As such, said communicating of the cryptographic value may implement a 2-way negotiation of the cryptographic value between the first device and the second device. Here, uplink control data may be communicated from the second device to the first device; and downlink control data may be communicated from the first device to the second device, to thereby negotiate the cryptographic value.

As a general rule, various functionalities may be generally suited as a basis for the integrity test. Specifically, there may be a tendency to use such functionalities for which the integrity test is particularly important, e.g., due to safety relevance of the respective functionalities, or privacy issues associated with the respective functionality.

For example, safety-critical functionalities may be encountered in industry control and measurement scenarios. Safety-critical functionalities may be encountered for autonomous driving or robot control in general. Privacy concerns may be associated with functionalities storing user data, e.g., name and address information, passwords or banking account information.

On a more general level, the functionality may be a specific function call provided by the first firmware and the second firmware. The function call may be associated with a respective function. Each function call may be associated with one or more executables. Each function call may include loading the one or more executables from a memory, e.g., from a specific source address of the function call. The function call may also include writing runtime data to a certain target address of the memory. For example, the fingerprint value may be indicative of the source address of the function call and/or the target address of the function call. The source address and/or the target address may be hashed to obtain the fingerprint value. Typically, where the source address or the target address of the function call is modified, this may be indicative of a modification of the function call itself. Therefore, modification of the second firmware if compared to the first firmware can be reliably detected based on the fingerprint values that are indicative of the source address and/or the target address.

As will be appreciated, above, various techniques have been explained which enable to reliably detect the modification of the second firmware if compared to the first firmware. Then, if a modification is detected, one or more countermeasures may be taken.

As a general rule, the kind and type of countermeasures is not particularly limited. Depending on the particular type of functionality, the type of the taken countermeasure may vary.

According to one example, a certificate of the second device may be added to a blacklist in response to detecting the modification. Then, the second device may be identified as being subject to an attack. Data originating from the second device may then be distrusted, in accordance with the blacklist.

A further example countermeasure includes transmitting a warning message to the second device. The warning message may help to take appropriate countermeasures locally at the second device, e.g., disabling execution of the second firmware at the second device or disabling the functionality. A user may be informed. The second device may be transferred to a safe mode.

As a general rule, various trigger criteria for the integrity test provided by the comparison of the first fingerprint value and the second fingerprint value are conceivable. For example, said comparing of the first fingerprint value and the second fingerprint value may be triggered in response to a request for executing the functionality. For example, if the functionality is required by a user of the second device, then, the integrity test may be triggered. Such a trigger criterion helps to test the integrity of the functionality required by a user based on the fingerprint values of the functionality itself. This provides for a high level of security, because the functionality itself is tested.

In other examples, however, it would also be possible that the user request execution of a further functionality different from the functionality; then, nonetheless, the integrity test can be executed for the functionality, e.g., if the functionality and the further functionality are closely associated with each other. Then, based on the integrity test of the functionality, certain conclusions can be drawn for the integrity of the further functionality. Such a scenario where the functionality itself serves as a reference for the further functionality may help to quickly implement the integrity test in a less complex manner, because the functionality may be limited in complexity if compared to the further functionality and may thus be executed faster or using limited resources. Furthermore, a prospective integrity test can be provided for the further functionality: it may be possible to implement the integrity test by executing the functionality and then predict the integrity of the further functionality without having to execute the further functionality itself. This may be helpful where the further functionality is safety critical and should not be executed unless its integrity has been positively confirmed.

Other trigger criteria are conceivable, e.g., beyond such a request for execution of the functionality or the further functionality. For example, the method may include triggering said comparing of the first fingerprint value and the second fingerprint value based on at least one of the predefined timing schedule and a randomized timing schedule. Thereby, freshness of the integrity test can be ensured.

For example, if no modification is detected, then a clearance control message may be transmitted to the second device. Thereby, access to one or more further functionalities of the second firmware may be granted. For example, the clearance control message may include a cryptographic secret required by the second device to execute the second firmware to provide the one or more further functionalities. This helps to implement safety-critical and privacy-sensitive one or more further functionalities in a controlled manner at the second device, avoiding unauthorized access to these one or more further functionalities based on modification of the second firmware.

According to an example, a method of operating a second device includes executing a second firmware to provide a functionality. Then, a second fingerprint value of the functionality of the second firmware is generated, based on said executing of the second firmware. The second fingerprint value is transmitted to a first device.

The method of operating the second device can be inter-related with the method of operating the first device, according to a further example. For example, the second device may receive the warning message or the clearance control message as explained above.

Therefore, effects may be achieved by the method of operating the second device which are comparable to the effects that may be of achieved by the method of operating the first device.

A first device includes processor circuitry configured to perform: obtaining a first fingerprint value of a functionality provided by a first firmware; receiving, from a second device, a second fingerprint value of the functionality provided by a second firmware is executed by the second device; comparing the first fingerprint value and the second fingerprint value; based on said comparing: selectively detecting a modification of the second firmware if compared to the first firmware.

A second device includes processor circuitry configured to perform: executing a second firmware to provide a functionality; generating a second fingerprint value of the functionality of the second firmware based on said executing of the second firmware; and transmitting, to a first device, the second fingerprint value.

A computer program product or computer program includes program code that may be executed by at least one processor circuitry. Executing the program code causes the at least one processor circuitry to perform a method of operating a first device. The method includes: obtaining a first fingerprint value of a functionality provided by a first firmware; receiving, from a second device, a second fingerprint value of the functionality provided by a second firmware is executed by the second device; comparing the first fingerprint value and the second fingerprint value; based on said comparing: selectively detecting a modification of the second firmware if compared to the first firmware.

A computer program product or computer program includes program code to be executed by at least one processor circuitry. Executing the program code by the at least one processor circuitry causes the at least one processor circuitry to perform a method of operating a second device, the method including: executing a second firmware to provide a functionality; generating a second fingerprint value of the functionality of the second firmware based on said executing of the second firmware; and transmitting, to a first device, the second fingerprint value.

Such examples and aspects described above may be combined with each other. For example, control signaling explained with respect to the first device may be applied to control signaling implemented by the second device.

### BRIEF DESCRIPTION OF THE DRAWINGS

- FIG. 1: schematically illustrates a computing architecture including two devices for integrity testing according to various examples.
- FIG. 2: is a flowchart of a method according to various examples.
- FIG. 3: is a flowchart of a method according to various examples.
- FIG. 4: is a flowchart of a method according to various examples.
- FIG. 5: is a flowchart of a method according to various examples.
- FIG. 6: schematically illustrates a firmware including functions and function calls according to various examples.

### DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques for integrity testing of a firmware are disclosed. Modification of the firmware can be reliably detected. Specifically, modification of a functionality provided by the firmware can be detected. Thereby, safety critical or privacy sensitive functionalities can be protected.

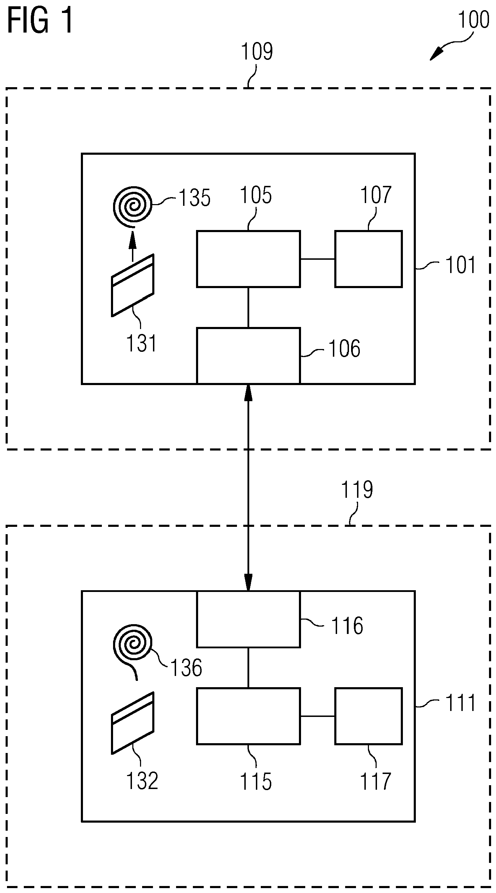

FIG. 1 schematically illustrates an architecture 100 that can be used for integrity testing of a firmware. Specifically, the architecture 100 can be used to detect a modification of the firmware 132 as executed by the device 111. The device 111 could be implemented by an FPGA, ASIC, or a general-purpose processor.

The device 111 includes processor circuitry 115, an interface for control signaling with a device 101, and a memory 117. For example, the firmware 132 may be stored at the memory 117 and then loaded by the processor circuitry 115 for execution. Specifically, in case the device 111 is implemented by the FPGA, this may involve loading a bitstream defining the firmware.

Integrity testing of the firmware 132 is achieved by using the device 101 as a reference. For example, the device 101 may be a server. The device 101 and the device 111 may be connected via the Internet. As illustrated in FIG. 1, the device 101 is arranged in an environment 109; and the device 111 is arranged in an environment 119. Generally, it is possible that the trust level associated with the device 101 is higher than the trust level associated with the device 111, because the environment 109 may be a protected or trusted environment. This helps to mitigate attack vectors aiming at the device 101.

In the example of FIG. 1, a firmware 131 is associated with the device 101. Again, it would be possible that a firmware 131 is stored at a memory 107 of the device 101, may be loaded from the memory 107 by the processor circuitry 105 of the device 101, and subsequently executed. Control signaling with the device 111 is implemented by the interface 106 of the device 101.

In the example of FIG. 1, the processor circuitry 105 executes the firmware 131. Then, based on said executing of the firmware 131, a fingerprint value 135 of a functionality provided by the firmware 131 is generated.

In one example, the source address and target address of one or more function calls implementing the functionality of the firmware 131 may be hashed to generate the fingerprint value 135.

To mitigate replay attack vectors and to ensure freshness, the device 101 executes the firmware using a randomized seed value. Therefore, the fingerprint value 135 will vary from each execution to each execution. The seed value may originate at the device 101 or at the device 111. Generally, the seed value may be communicated between the device 101 and the device 111, to provide synchronization thereof. Then, both, the firmware 131, as well as the firmware 132 can be executed based on the same seed value.

At the device 111, the fingerprint value 136 of the function call of the firmware 132 is generated by hashing the source address and the target address of the function call. Then, the device 111 transmits the fingerprint value 136 which is subsequently received by the device 101.

The fingerprint value 136 and the fingerprint value 135 can be generated based on a hash mapping that ensures authenticity and integrity, but maintains privacy. Furthermore, modification of the hash value 136 on the communication link between the devices 101 and 111 may be prevented. For example, communication between the device 101 and the device 111 may be protected using an asymmetric or symmetric cryptographic algorithm.

Next, the fingerprint value 135 is compared with a fingerprint value 136 at the device 101. If there is a match, then it can be assumed that the firmware 132 has not been modified if compared to the firmware 131. For example, in connection with an SRAM - FPGA scenario for the device 111, this may allow for the conclusion that the bitstream has not been modified. However, if the comparison yields a mismatch between the fingerprint values 135, 136, a modification of the firmware 136 if compared to the firmware 131 can be detected.

Different actions may be taken, depending on whether a modification has been detected or not. For example, if no modification has been detected, it would be possible to grant the device 111 with access to a protected service, e.g., by sending a cryptographic secret. This may include communicating a respective clearance control message. For example, if modification of the firmware 132 is detected, a certificate of the device 111 may be added to a blacklist. Alternatively or additionally, a warning message may be transmitted to the device 111. Alternatively or additionally, the warning message may be transmitted to a registered user. Thereby, a security department or the owner of the device may be informed.

As a general rule, various options are available to implement such an integrity test as explained in connection with FIG. 1. Hereinafter, various example implementations of the integrity test are described.

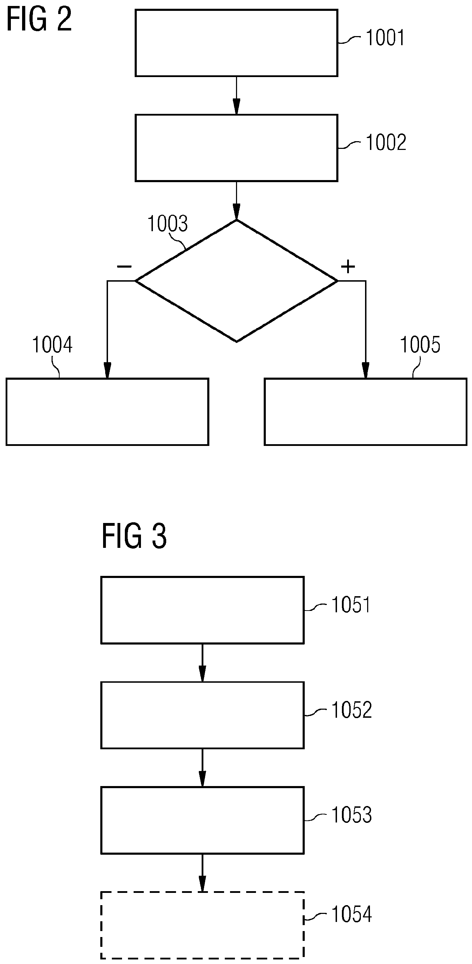

FIG. 2 is a flowchart of a method according to various examples. For example, the method according to FIG. 2 may be performed by the processor circuitry 105 of the device 101 (cf. FIG. 1).

At block 1001, a first fingerprint value of a functionality provided by a first firmware is obtained. This may be through executing the first firmware and generating the first fingerprint value based on said executing of the first firmware, e.g., as a hash value. It would also be possible that the first fingerprint value has been pre-generated and is loaded or retrieved from a database.

Next, at block 1002, a second fingerprint value of the functionality provided by a second firmware as executed by a second device is received. The second fingerprint value is received from the second device.

Next, at block 1003, a comparison between the first fingerprint value of block 1001 and the second fingerprint value of block 1002 is performed. Depending on the outcome of the comparison at block 1003, different actions may be taken at blocks 1004 and 1005. For example, if the comparison indicates a match between the first fingerprint value and the second fingerprint value, then it can be judged that the second firmware has not been modified if compared to the first firmware, at block 1005. Differently, if there is no match at the comparison of block 1003, then a modification of the second firmware if compared to the first firmware may be detected at block 1004. Certain countermeasures may be taken at block 1004, e.g., adding the second device to a blacklist, etc.

On the other hand, if block 1005 is executed, in some examples, it would be possible to transmit clearance control data to the second device. This may grant access to otherwise protected functionalities. The clearance control data may include a cryptographic secret required to execute the second firmware to provide a respective further functionality.

FIG. 3 is a flowchart of a method according to various examples. For example, the method according to FIG. 3 may be performed by the processor circuitry 115 of the device 111 (cf. FIG. 1).

At block 1051, a second firmware is executed. The second firmware is executed to provide a functionality. For example, the functionality may be implemented by one or more function calls, etc.

Next, at block 1052, a second fingerprint value of the functionality of the second firmware is generated, based on executing the second firmware at block 1051. For example, a source address and/or a target address of the respective function call implementing the functionality may be hashed.

Next, at block 1053, the second fingerprint value is transmitted to a first device. Block 1053 is inter-related with block 1002.

Next, at optional block 1054, a clearance control message is received from the first device. The clearance control message is indicative of a match between the second fingerprint value of the functionality, as generated at block 1052, and a first fingerprint value of the functionality, obtained as a reference at the first device. The clearance control message grants access to an otherwise protected further functionality. Hence, in response to receiving the clearance control message at block 1054, the firmware can be executed to provide the further functionality.

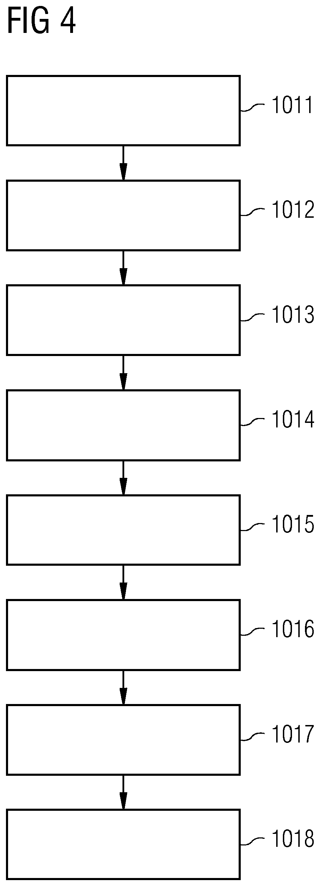

FIG. 4 is a flowchart of a method according to various examples. For example, the method according to FIG. 4 may be executed by the processor circuitries 105, 115 of the devices 101, 111. The method according to FIG. 4 illustrates aspects with respect to protecting control signaling between the devices 101, 111 using symmetric cryptographic algorithms. Examples of such a symmetric cryptographic algorithm includes AES-GCM, AES-CBC MAC, HMAC, etc. The symmetric cryptographic key of the symmetric cryptographic algorithm could be derived from a unique identity of the device 111 and/or a unique cryptographic value - e.g., a cryptographic key or other cryptographic material.
At block 1011, the device 101 generates a seed value, e.g., using a randomize generator. The seed value serves as an input for executing the firmware. Additionally, at block 1011, a Nonce value is generated.

For example, the seed value may include function parameters. Furthermore, a part of the seed value may be randomized, e.g., by using a randomize generator. If the seed value includes no randomization, then the Nonce value can be used to ensure freshness to secure the communication channel between the devices 101 and 111 against replay attacks.

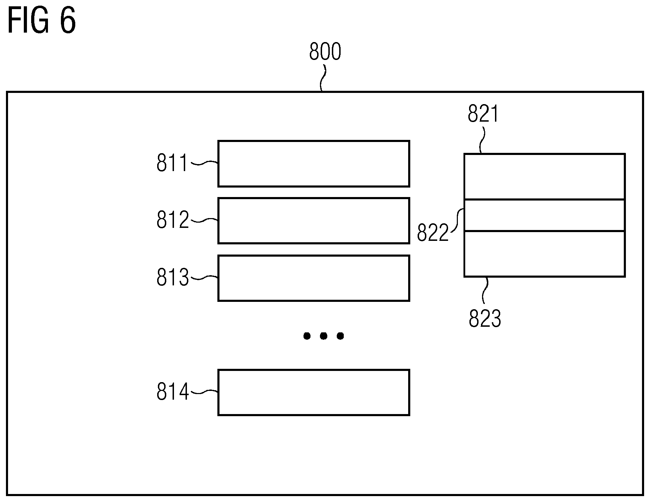

Based on the seed value, the device 101 executes the firmware to provide one or more function calls, block 1012. For example, a given function may be executed which includes a plurality of function calls (cf. FIG. 6). The source address and target address of the one or more function calls of the firmware is respectively hashed and an hash result H_{prog} is generated as a first fingerprint value. Based on the randomized seed value, at each execution of the firmware, a different hash value H_{prog} is generated; thereby, freshness is ensured. The reason for this is that based on different seed values loops in the program code of the firmware take different length and dependent functions use different program path, which makes the hash value H_{prog} unique. Generation of the hash value is the first fingerprint value occurs at block 1013.

Next, at block 1014, the device 101 transmits the Nonce, the seed value, and an identity of the function call - as a control value being indicative of the one or more function calls - to the device 111, e.g., an FPGA. A soft-Central Processing Unit (CPU) is implemented by the FPGA. For example, the control value could indicate a function associated with one or more function calls.

The soft-CPU executes a second firmware corresponding to the identity of the function call parameter. As input parameter the soft-CPU uses the seed value, block 1015.
Then, at block 1016, a second fingerprint value is generated, by hashing the source address and target address of one or more function calls. For example, this hashing may be executed by hardware complementing the soft-CPU and being connected to the pipeline of the soft-CPU. Again, the hash value can be denoted H_{prog}. H_{prog} provides freshness, because it is generated from the function call being started based on the randomized seed value received at block 1014 at the device 111.

Next, at block 1017, the second fingerprint value is transmitted to the device 101. This can be performed in an encrypted manner. Specifically, it would be possible that prior to transmitting the second fingerprint value, the second fingerprint value is encrypted based on the Nonce, e.g., by hashing H_{prog} based on Nonce received at block 1014. The Nonce provides freshness and thus mitigates replay attacks."

Alternatively or additionally, at block 1017, an asymmetric cryptographic algorithm can be used to encrypt the second fingerprint value, and/or the Nonce, and/or the seed value. Next, the device 101, at block 1018, compares the first fingerprint value of block 1013 with the second fingerprint value of block 1016. If there is a match, then it can be judged that the soft-CPU and its associated firmware in the bitstream have not been modified. If there is no match, countermeasures can be taken, e.g., adding a certificate of the soft-CPU to a blacklist.

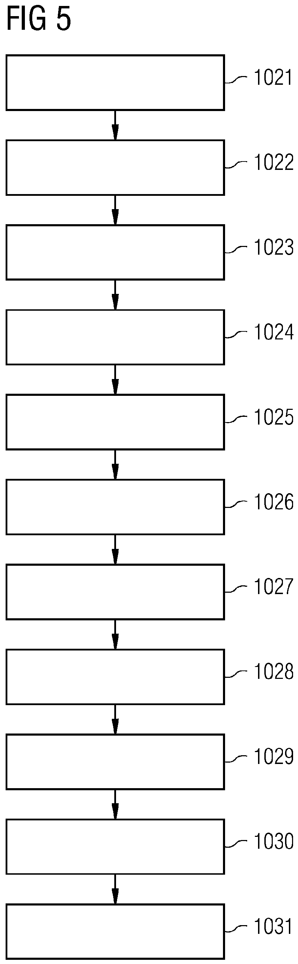

FIG. 5 is a flowchart of a method according to various examples. For example, the flowchart of FIG. 5 could be executed by the processor circuitries 105, 115 of the devices 101, 111. FIG. 5 illustrates a scenario where an asymmetric cryptographic algorithm is used.

Initially, at block 1021, a soft-CPU implemented by the processor circuitry 115 of the device 111, e.g., again an FPGA, generates a random value A. The random value A is hashed to a hash chain of a specific depth, e.g.: *Hash (A) =B; Hash (B) =C;* ... *Hash(Y)=Z.* Then, the soft-CPU, at block 1022, transmits the value A authentic and private, e.g., using an asymmetric cryptographic algorithm such as RSA. The device 101 receives the value A, block 1022. A will be used to encrypt control signaling between the devices 101, 111. Specifically, A will be used indirectly to secure communication between devices 101, 111.

At block 1023, the device 101 determines a random seed value. For example, the seed value may include function parameters. Furthermore, a part of the seed value may be randomized, e.g., by using a randomize generator. If the seed value includes no randomization, then the Nonce value can be used to ensure freshness to secure the communication channel between the devices 101 and 111 against replay attacks.

At block 1024, the device 101 executes the first firmware to provide the functionality, based on the seed value. For example, all function calls associated with a certain function of the first firmware may be executed.

Next, at block 1025, the device 101 generates the first fingerprint value, e.g., by hashing the source address and target address of one or more respective function calls provided by the firmware to obtain the hash value H_{prog}.

Next, at block 1026, the device 101 can decrypt the message received at block 1022 using the appropriate cryptographic key. From this, the device 101 obtains the value A. Based on the value A, the device 101 also generates the same hash chain as has been previously generated at the device 111 in block 1021. The device 101 thereby obtains the parameters A, B, C - Z. Then, the device 101 randomly selects one of the values A - Z, e.g., value U. U will be used to encrypt control signaling between the devices 101, 111.

Then, at block 1027, the seed value, and indicator indicative of the selected value of the hash chain - here, value U -, a control value being indicative of the specific function call(s), and the seed value are transmitted to the device 111. The device 111 receives this information. For example, the control value may be indicative of the function associated with the function call.

At block 1028, the soft-CPU executes the second firmware based on the seed value, to provide the function call identified by the control value received at block 1027. Then, again, the source address and target address of the respective function calls executed by the main function which is identified by the control value are hashed to obtain the value H_{prog}. H_{prog} provides freshness, because the seed value has a random contribution.

Based on the indicator indicative of the value selected from the hash chain, the soft-CPU also selects the hash value U and hashes H_{prog} using U to obtain Hᵣₑₛᵤₗₜ, block 1029. Therefore, the scenario of FIG. 5 implements a 2-way negotiation of the cryptographic value, here U, between the devices 101 and 111.

Hᵣₑₛᵤₗₜ is protected based on U against replay attacks.

Depending on possible attack vectors, Hᵣₑₛᵤₗₜ can be secured using an asymmetric cryptographic algorithm such as RSA and/or simply encrypted based on U. In general, any appropriate encryption algorithm may be used, e.g., an encryption algorithm not dependent on U.

Then, at block 1030, the second fingerprint value is transmitted to the device 101 for comparison with the first fingerprint value, block 1031.

FIG. 6 schematically illustrates aspects with respect to a firmware 800. The firmware includes multiple functions 811-814. Sometimes, the functions 811-814 are referred to as main routines. For example, function 811 may implement update functionality while function 812 may activate a separate service.

Typically, each function 811-814 is associated with a plurality of respective function calls 821-823 (illustrated only with respect to function 812 in FIG. 6, for sake of simplicity). According to various examples described herein, it would be possible that the fingerprint values are indicative of hash values of the respective function calls 821-823 of a given function 811-814. Each function call 821-823 may implement parts of the functionality associated with the respective function 812. For example, the fingerprint values could be indicative of hash values of all function calls provided by a respective function 811-814 which is indicated by the control value.

Summarizing, above techniques have been described which provide a hardware-implemented and/or software-implemented control flow attestation for validating that parts of a bitstream of an FPGA are authentic. This mitigates limitations of reference implementations with respect to testing integrity of an FPGA configuration after the bitstream has been loaded into the FPGA.

Such integrity testing of at least parts of the bitstream - e.g., those parts of the bitstream that implement a soft-CPU and/or the firmware of the soft-CPU - is provided by a remote service and a local hash module for determining a fingerprint value. The hash module may be hardware-implemented.

Based on such techniques, security of FPGAs is not only tied to the security mechanisms of the FPGA itself. Rather, it becomes possible to centrally test integrity of at least parts of the firmware implemented by the FPGA. This helps to mitigate attack vectors and provide protection against unauthorized modification of the FPGAs firmware.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various scenarios have been described in the context of an FPGA-implemented processor circuitry. However, similar techniques may be readily applied to other kinds and types of processor circuitries, e.g., ASICs or micro processors or central processing units and graphical processing units. For example, various kinds and types of such processor circuitry may provide for the ability to hash function calls, thereby generating fingerprinting values as described throughout the present disclosure. Such ability to hash function calls may be provided for by an hardware-implemented ASIC.

For further illustration, above various scenarios have been described in which fingerprint values are indicative of hash values of a function call. As a general rule, the fingerprint values may be indicative of the hash values of a plurality of function calls, e.g., hundreds or thousands of function calls. For example, all function calls included in a given function which is indicated by a respective control value may be subject to the respective fingerprint value.

For still further illustration, above various scenarios have been described where the fingerprint value is generated using a key. However, this is generally optionally. For example, in other scenarios the integrity of the fingerprint value may be secured by other means. Example implementations include protecting the integrity by using a partly random seed value or non-random seed value to execute the firmware. Then, a hash value may be obtained which could again be hashed based on a Nonce and then be encrypted.

## Claims

1. A method of operating a first device (101, 105, 106, 107), comprising:
- obtaining a first fingerprint value (135) of a functionality (811-814, 821-823) provided by a first firmware (131, 800),
- receiving, from a second device (111, 115, 116, 117), a second fingerprint value (136) of the functionality (811-814, 821-823) provided by a second firmware (132, 800) as executed by the second device (111, 115, 116, 117),
- comparing the first fingerprint value (135) and the second fingerprint value (136), and
- based on said comparing: selectively detecting a modification of the second firmware (132, 800) if compared to the first firmware (131, 800).

2. The method of claim 1,
wherein said obtaining of the first fingerprint value (135) comprises:
- executing the first firmware (131, 800), and
- generating the first fingerprint value (135) based on said executing of the first firmware (131, 800).

3. The method of claim 2, further comprising:
- communicating a seed value between the first device (101, 105, 106, 107) and the second device (111, 115, 116, 117),
wherein the first firmware (131, 800) is executed based on the seed value,
wherein at least a part of the seed value is optionally randomized.

4. The method of claims 2 or 3, further comprising:
- communicating a control value between the first device (101, 105, 106, 107) and the second device (111, 115, 116, 117),
the control value being indicative of the functionality (811-814, 821-823),
wherein the first firmware (131, 800) is executed based on the control value.

5. The method of claim 1,
wherein said obtaining of the first fingerprint value (135) comprises:
- retrieving the first fingerprint value (135) from a database.

6. The method of any one of the preceding claims, further comprising:
- communicating a cryptographic value between the first device (101, 105, 106, 107) and the second device (111, 115, 116, 117),
wherein the second fingerprint value (136) is received encrypted in accordance with the cryptographic value.

7. The method of claim 6,
wherein the cryptographic value is at least one of a Nonce and an indicator indicative of a key used for generating the first fingerprint value (135) and/or the second fingerprint value (136).

8. The method of claims 6 or 7,
wherein said communicating of the cryptographic value implements a two-way negotiation of the cryptographic value between the first device (101, 105, 106, 107) and the second device (111, 115, 116, 117).

9. The method of any one of the preceding claims,
wherein the functionality (811-814, 821-823) is at least one of a function and a function call provided by the first firmware (131, 800) and the second firmware (132, 800).

10. The method of claim 9,
wherein the first fingerprint value (135) is indicative of at least one of a source address of the function call and a target address of the function call.

11. The method of any one of the preceding claims, further comprising:
- in response to detecting the modification: adding a certificate of the second device (111, 115, 116, 117) to a blacklist and/or transmitting a warning message to the second device (111, 115, 116, 117) or a third device.

12. The method of any one of the preceding claims, further comprising:
- triggering said comparing of the first fingerprint value (135) in response to a request for executing the functionality (811-814, 821-823) or a request for executing a further functionality (811-814, 821-823) different from the functionality (811-814, 821-823).

13. The method of any one of the preceding claims, further comprising:
- in response to not detecting the modification: transmitting clearance control message to the second device (111, 115, 116, 117).

14. A method of operating a second device (111, 115, 116, 117), comprising:
- executing a second firmware (132, 800) to provide a functionality (811-814, 821-823) of the second firmware (132, 800),
- based on said executing of the second firmware (132, 800): generating a second fingerprint value (136) of the functionality (811-814, 821-823), and
- transmitting, to a first device (101, 105, 106, 107), the second fingerprint value (136).

15. The method of claim 14, further comprising:
- receiving clearance control message from the first device (101, 105, 106, 107),
- selectively executing the firmware to provide a further functionality (811-814, 821-823) in response to said receiving of the clearance control message.

16. A first device (101, 105, 106, 107) comprising processor circuitry configured to perform:
- obtaining a first fingerprint value (135) of a functionality (811-814, 821-823) provided by a first firmware (131, 800),
- receiving, from a second device (111, 115, 116, 117), a second fingerprint value (136) of the functionality (811-814, 821-823) provided by a second firmware (132, 800) as executed by the second device (111, 115, 116, 117),
- comparing the first fingerprint value (135) and the second fingerprint value (136),
- based on said comparing: selectively detecting a modification of the second firmware (132, 800) if compared to the first firmware (131, 800).

17. A second device (111, 115, 116, 117) comprising processor circuitry configured to perform:
- executing a second firmware (132, 800) to provide a functionality (811-814, 821-823),
- generating a second fingerprint value (136) of the functionality (811-814, 821-823) of the second firmware (132, 800) based on said executing of the second firmware (132, 800),
- transmitting, to a first device (101, 105, 106, 107), the second fingerprint value (136).
